(19) Europäisches Patentamt / European Patent Office / Office européen des brevets

(11) **EP 2 948 789 B1**

(12) **EUROPÄISCHE PATENTSCHRIFT**

(45) Veröffentlichungstag und Bekanntmachung des Hinweises auf die Patenterteilung:
**28.07.2021   Patentblatt 2021/30**

(21) Anmeldenummer: **13815391.1**

(22) Anmeldetag: **03.12.2013**

(51) Int Cl.:
*G01S 13/931* (2020.01)     *G01S 13/34* (2006.01)
*G01S 13/58* (2006.01)     *G01S 13/93* (2020.01)

(86) Internationale Anmeldenummer:
**PCT/EP2013/075357**

(87) Internationale Veröffentlichungsnummer:
**WO 2014/114391 (31.07.2014 Gazette 2014/31)**

(54) **FMCW-RADAR MIT ABSTANDSBEREICHSEINTEILUNG**

FMCW RADAR HAVING DISTANCE-RANGE GRADUATION

RADAR FMCW À RÉPARTITION EN PLAGES DE DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.01.2013   DE 102013200951**

(43) Veröffentlichungstag der Anmeldung:
**02.12.2015   Patentblatt 2015/49**

(73) Patentinhaber: **Robert Bosch GmbH
70442 Stuttgart (DE)**

(72) Erfinder: **SCHOOR, Michael
70195 Stuttgart (DE)**

(56) Entgegenhaltungen:
**EP-A2- 1 918 736        DE-A1- 10 243 811
DE-A1-102009 000 468**

• **ROHLING H ET AL: "Waveform design principles for automotive radar systems", RADAR, 2001 CIE INTERNATIONAL CONFERENCE ON, PROCEEDINGS OCT 15-18, 2001, PISCATAWAY, NJ, USA,IEEE, 15 October 2001 (2001-10-15), pages 1-4, XP010577760, ISBN: 978-0-7803-7000-5**

**Beschreibung**

STAND DER TECHNIK

Die Erfindung betrifft ein Verfahren zur Bestimmung von Information über Abstände und Relativgeschwindigkeiten georteter Objekte mit einem FMCW-Radar, bei dem die Frequenz eines Sendesignals in der Form von Frequenzrampen moduliert wird und die in den Frequenzrampen empfangenen Signale zu Basisbandsignalen heruntergemischt werden.

Weiter betrifft die Erfindung einen FMCW-Radarsensor, in dem dieses Verfahren implementiert ist und der beispielsweise in Fahrerassistenzsystemen für Kraftfahrzeuge eingesetzt werden kann.

Das Grundprinzip der Funktion eines FMCW-Radarsensors (frequency modulated continuous wave) besteht darin, dass die Frequenz eines gesendeten Radarsignals rampenförmig moduliert wird und das von einem Objekt reflektierte und wieder vom Sensor empfangene Signal mit einem Teil des zum Empfangszeitpunkt gesendeten Signals zu einem Basisbandsignal gemischt wird. Das Basisbandsignal enthält dann eine Frequenzkomponente, die der Differenzfrequenz zwischen dem gesendeten und dem empfangenen Signal entspricht. Die Frequenz ist einerseits aufgrund der während der Signallaufzeit eingetretenen Änderung der Sendefrequenz vom Objektabstand abhängig, ist jedoch andererseits aufgrund des Dopplereffekts auch von der Relativgeschwindigkeit des Objektes abhängig.

Das Basisbandsignal wird üblicherweise durch schnelle Fourier-Transformation in sein Frequenzspektrum zerlegt, und jedes geortete Objekt wird in diesem Spektrum durch einen Peak bei einer Frequenz repräsentiert, die vom Abstand und der Relativgeschwindigkeit des Objektes abhängig ist. Dabei legt die Frequenz eines erhaltenen Peaks eine Beziehung zwischen der Relativgeschwindigkeit und dem Abstand in Form eines linearen Zusammenhangs, entsprechend einer Geraden in einem Abstands/Geschwindigkeits-Raum fest. Der Begriff "linear" wird dabei so verstanden, dass der dadurch bezeichnete Zusammenhang einen Linearitätsfaktor und einen additiven Term umfassen kann.

Anhand einer einzelnen gewonnenen Frequenz lässt sich daher der tatsächliche Abstand und die tatsächliche Geschwindigkeit eines Objektes noch nicht eindeutig bestimmen. Dazu ist es vielmehr erforderlich, dasselbe Objekt auf mindestens zwei Frequenzmodulationsrampen des gesendeten Signals zu orten, wobei diese beiden Frequenzmodulationsrampen unterschiedliche Steigungen haben müssen.

Eine Zuordnung der in den einzelnen Frequenzmodulationsrampen gewonnenen Frequenzen des Basisbandsignals zu Objekten erfolgt dann anhand von Koinzidenzen zwischen den zu beiden Frequenzen gehörenden möglichen Werten von Abstand und Relativgeschwindigkeit. Dies entspricht bei zwei Geraden im Abstands/Geschwindigkeits-Raum einem Schnittpunkt der beiden Geraden. Diese Zuordnung der Frequenzen oder Geraden zu potentiellen Objekten wird als Matching oder Frequenzmatching bezeichnet. Durch einen solchen Abgleich der unterschiedlichen, bei den einzelnen Frequenzmodulationsrampen erhaltenen linearen Beziehungen können Relativgeschwindigkeit und Abstand eines Radarobjektes berechnet werden. Das FMCW-Verfahren ist besonders effizient, wenn nur wenige Radarobjekte erfasst werden.

Wenn sich mehrere Objekte gleichzeitig im Ortungsbereich des Radarsensors befinden, besteht jedoch das Problem, dass sich auch bei Auswertung von zwei Modulationsrampen nicht mehr eindeutig bestimmen lässt, welcher Peak zu welchem Objekt gehört. So erhält man beispielsweise für eine Situation mit zwei Objekten im Abstands/Geschwindigkeits-Raum, im Folgenden auch als d-v-Raum bezeichnet, zwei Paare paralleler Geraden, die vier Schnittpunkte miteinander bilden. Es können jedoch nur zwei dieser Schnittpunkte realen Objekten entsprechen, während die anderen Schnittpunkte sogenannte Scheinobjekte repräsentieren.

Üblicherweise werden daher mehr als zwei Modulationsrampen unterschiedlicher Steigung verwendet, beispielsweise vier Modulationsrampen. Reale Objekte lassen sich dann daran erkennen, dass im d-v-Raum eine Koinzidenz zwischen Abstands-Geschwindigkeits-Paaren besteht, die zu den auf den vier verschiedenen Frequenzrampen erhaltenen Frequenzen des Basisbandsignals gehören.

Waveform Design Principles for Automotive Radar Systems, H. Rohling und M.-M. Meinecke, IEEE 2001, XP010577760, beschreibt ein Beispiel eines solchen Modulationsprinzips mit vier Rampen.

Da sich jedoch die Frequenzen der Peaks nur mit begrenzter Genauigkeit bestimmen lassen, kann man auch für ein reales Objekt nicht erwarten, dass sich die vier Geraden, die zu den vier Modulationsrampen gehören, exakt an einem Punkt schneiden. Vielmehr wird man bis zu sechs verschiedene Schnittpunkte erhalten, die allerdings relativ nahe beieinander liegen. Beim Abgleichen der unterschiedlichen linearen Beziehungen, entsprechend der Suche nach einer Koinzidenz, wird daher eine gewisse Toleranz zugelassen. Das Kriterium für ein reales Objekt kann beispielsweise darin bestehen, dass sich alle aus den unterschiedlichen Modulationsrampen gewonnenen Geraden im Rahmen der Toleranzgrenzen in einem Punkt schneiden.

In Situationen mit einer Vielzahl von Radarzielen, wie beispielsweise Objekten in Form von Leitplankenpfosten oder einer Vielzahl von Kraftfahrzeugen im Ortungsbereich, beispielsweise Kraftfahrzeugen am Ende eines Staus oder auf Parkplätzen, erhöht sich jedoch der erforderliche Aufwand zur Detektierung der Objekte. So steigt mit zunehmender Objektanzahl und zunehmender Anzahl der Modulationsrampen der Berechnungsaufwand.

DE 10 2009 000 468 A1 beschreibt ein Radarverfahren mit Rampensequenzen, bei dem eine Periode einer Radarwelle eine Anzahl aufeinanderfolgenden Rampen umfasst, die jeweils um eine Frequenzverschiebung relativ zu der vorherigen Rampe versetzt sind. An abgetasteten Werten der empfangenen gestreuten Welle wird eine zweidimensionale Transformation durchgeführt. Anhand der Position eines Peaks im zweidimensionalen Spektrum werden die Distanz und die Geschwindigkeit eines Radarziels eindeutig berechnet.

EP 1918 736 A2 beschreibt eine Radarvorrichtung, bei der in einer Periode die Frequenz des ausgestrahlten Signals wiederholt stückweise abwechselnd den Verläufen zweier Frequenzrampen mit unterschiedlichen Anfangswerten und unterschiedlicher Steigung folgt. In einem weiteren Ausführungsbeispiel wechselt die Frequenz zwischen verschiedenen konstanten Werten, die abwechselnd mit einem Startpunkt oder einem Zwischenwert auf einer ersten und einer zweiten geraden Frequenzrampe liegen.

DE 102 43 811 A1 beschreibt ein Verfahren zur Abstands- und Geschwindigkeitsmessung an mehreren Objekten mittels FMCW-Radar, bei dem eine Zuordnung von Peaks zu Objekten erfolgt, indem in einer Matching-Prozedur die zu demselben Objekt gehörenden Peaks in den für verschiedene Rampen aufgenommenen Spektren einander zugeordnet werden und die Abstände und Geschwindigkeiten der Objekte aus den Frequenzen der Peaks berechnet werden.

OFFENBARUNG DER ERFINDUNG

Aufgabe der Erfindung ist es, ein Verfahren zur Bestimmung von Information über Abstände und Relativgeschwindigkeiten georteter Objekte anzugeben, das eine verbesserte Detektionsleistung hat und/oder einen verringerten Berechnungsaufwand erfordert.

Diese Aufgabe wird erfindungsgemäß durch ein Verfahren zur Bestimmung von Informationen über Abstände und Relativgeschwindigkeiten georteter Objekte mit einem FMCW-Radar gelöst, bei dem:

- innerhalb eines Messzyklus die Frequenz eines Sendesignals in der Form unterschiedlicher Folgen von Frequenzrampen moduliert wird, wobei innerhalb einer jeweiligen Folge die Mittelpunkte der Frequenzrampen auf einer übergeordneten Rampe liegen, wobei der Messzyklus wenigstens zwei übergeordnete Rampen umfasst, die eine unterschiedliche Rampensteigung haben, und wobei die Steigung der Frequenzrampen (26) einer jeweiligen Folge von Frequenzrampen eines Messzyklus von der Steigung der zugehörigen übergeordneten Rampe verschieden ist;

- die in den Frequenzrampen einer jeweiligen Folge empfangenen Signale zu Basisband-Teilsignalen heruntergemischt werden, wobei jeder Frequenzrampe der Folge ein Teilsignal zeitlich zugeordnet ist;

- für wenigstens eine Frequenzlage in Frequenzspektren der Basisband-Teilsignale ein übergeordnetes Frequenzspektrum über die zeitliche Folge von Amplituden bei der Frequenzlage in den Frequenzspektren der jeweiligen Folge der Basisband-Teilsignale bestimmt wird;

- Peaks in dem wenigstens einen übergeordneten Spektrum einer jeweiligen Folge von Frequenzrampen durch Geraden in einem Abstands/Geschwindigkeits-Raum präsentiert werden, deren jeweilige Steigung von der Steigung der übergeordneten Rampe abhängt;

- unterschiedliche Frequenzlagen in den Frequenzspektren der Teilsignale, bei denen Peaks in einem übergeordneten Spektrum auftreten, durch unterschiedliche, auf wenigstens einen Entfernungsbereich begrenzte Bänder des Abstands/Geschwindigkeits-Raums repräsentiert werden; und

- eine Zuordnung von durch Geraden im Abstand-/Geschwindigkeits-Raum repräsentierten Peaks in den übergeordneten Spektren zu Objekten anhand einer Suche nach Orten im Abstands/Geschwindigkeits-Raum erfolgt, bei denen sich Geraden schneiden, die aus unterschiedlichen Folgen von Frequenzrampen erhaltene Peaks der übergeordneten Spektren repräsentieren, wobei bei der Zuordnung die jeweiligen, die Frequenzlagen in den Frequenzspektren der Basisband-Teilsignale repräsentierenden Bänder des Abstands/Geschwindigkeits-Raums berücksichtigt werden, die den Peaks durch die Frequenzlagen der Peaks in den Frequenzspektren der Basisband-Teilsignale zugeordnet sind, und

- die Zuordnung von in den übergeordneten Spektren auftretenden Peaks zu Objekten für unterschiedliche, jeweiligen Frequenzlagen (k) der Teilsignal-Frequenzspektren (An) zugeordnete Bänder (40, 42) separat durchgeführt wird.

Somit wird vorzugsweise das Frequenzmatching, d.h. die Zuordnung von durch Geraden im Abstand-/Geschwindigkeits-Raum repräsentierten Peaks in den übergeordneten Spektren zu Objekten, durchgeführt basierend auf den die Peaks in dem wenigstens einen übergeordneten Spektrum repräsentierenden Geraden im Abstands/Geschwindigkeits-Raum, und basierend auf den jeweiligen, die Frequenzlagen in den Frequenzspektren der Basisband-Teilsignale repräsentierenden Bändern des Abstands/Geschwindigkeits-Raums, die den Peaks durch die Frequenzlagen der Peaks in den Frequenzspektren der Basisband-Teilsignale zugeordnet sind. Insbesondere erfolgt vorzugsweise das Frequenzmatching basierend auf der Zuordnung der Bänder des Abstands/Geschwindigkeits-Raums zu den Peaks in den übergeordneten Spektren.

Die übergeordneten Rampen können beispielsweise aufgefasst werden als herkömmlichen Modulationsrampen entsprechend, die allerdings jeweils durch eine Folge kurzer Frequenzrampen nachgebildet werden. Vorteilhaft ist, dass für die aufeinanderfolgenden kurzen Rampen einer Folge keine großen Frequenzsprünge erforderlich sind. Dies hält die Anforderungen an die Frequenzerzeugung niedrig.

Bei einer Spektralanalyse der Basisbandsignale wird beispielsweise eine zweidimensionale Fourier-Transformation durchgeführt. Eine erste Dimension entspricht dabei der Bestimmung von Frequenzspektren der jeweiligen, den einzelnen kurzen Frequenzrampen zugeordneten Basisband-Teilsignale. Die Frequenzspektren bestehen beispielsweise aus komplexen Amplituden bei jeweiligen Frequenzlagen. Eine zweite Dimension der Fourier-Transformation entspricht dabei dem zeitlichen Verlauf über die übergeordnete Rampe, wobei jeder Rampe ein Zeitpunkt zugeordnet wird. Ein Peak im zweidimensionalen Frequenzspektrum kennzeichnet eine Frequenzlage in den Frequenzspektren der den kurzen Rampen zugeordneten Basisband-Teilsignale sowie eine Frequenz im zeitlichen Verlauf von Werten dieser Frequenzspektren über die übergeordnete Rampe bei der betreffenden Frequenzlage in den Teilsignal-Frequenzspektren. Mit anderen Worten liegt der Peak bei einer Frequenz im übergeordneten Spektrum bei einer Frequenzlage in den Teilsignal-Frequenzspektren.

Vorzugsweise wird das übergeordnete Spektrum unter Berücksichtigung der zugehörigen Phasen der Amplituden in den Frequenzspektren der Folge der Basisband-Teilsignale bestimmt. Dies kann beispielsweise erfolgen, indem in dem Schritt der Bestimmung eines übergeordneten Frequenzspektrums für wenigstens eine Frequenzlage in Frequenzspektren der Basisband-Teilsignale ein übergeordnetes Frequenzspektrum über die zeitliche Folge von komplexen Amplituden bei der Frequenzlage in den Frequenzspektren der Folge der Basisband-Teilsignale bestimmt wird. Die komplexen Amplituden können beispielsweise durch Betrag und Phase repräsentiert werden. Eine solche phasenrichtige Bildung des jeweiligen übergeordneten Spektrums ist vorteilhaft für die genaue Detektion von Peaks im übergeordneten Spektrum.

Die in einem übergeordneten Spektrum auftretenden Frequenzen werden jeweils repräsentiert durch eine Gerade im d-v-Raum, deren Steigung von der Steigung der übergeordneten Rampe abhängt. Dies entspricht bei einer herkömmlichen FMCW-Modulationsrampe der durch die Peak-Frequenz gekennzeichneten Geraden im d-v-Raum.

Die unterschiedlichen Frequenzlagen in den Frequenzspektren der Basisband-Teilsignale werden durch unterschiedliche Bänder des d-v-Raums repräsentiert, die jeweils auf einen Abstandsbereich begrenzt sind. Ein Band stellt eine Teilfläche des d-v-Raums dar. Beispielsweise werden die Teilsignale in den einzelnen Frequenzrampen an wenigen Abtaststellen abgetastet. Dies führt zu einer groben Unterteilung des d-v-Raums in Bänder, die zur Bestimmung einer eindeutigen Beziehung zwischen Abstand und Relativgeschwindigkeit noch nicht ausreichend ist. Die Bänder sind jeweils auf einen Abstandsbereich begrenzt. Insbesondere umfassen die Bänder für einen jeweiligen Geschwindigkeitswert jeweils einen Abstandsbereich, der einer Abstands-Breite des Bands entspricht. Beispielsweise kann die Abstands-Breite der Bänder jeweils wenigstens 10 m, vorzugsweise wenigstens 20 m, beispielsweise wenigstens 30 m betragen.

Einem Peak im zweidimensionalen Frequenzspektrum ist damit einerseits durch die Frequenz im übergeordneten Spektrum über die Folge der Frequenzrampen eine Gerade im d-v-Raum zugeordnet, und andererseits durch die Frequenzlage in den Teilsignal-Frequenzspektren der kurzen Frequenzrampen ein Band des d-v-Raums zugeordnet. Indem diese Zuordnung von Bänder im d-v-Raum zu den jeweiligen Geraden im d-v-Raum bei dem Frequenzmatching berücksichtigt wird, kann der Aufwand für das Matching verringert werden.

Durch die Berücksichtigung der Bänder können Überlagerungen von Radarobjekten im Frequenzbereich mit anderen, stehenden Radarzielen besser ausgewertet werden. Vorteilhaft ist auch, dass durch eine verbesserte Detektion von Abständen und Relativgeschwindigkeiten von Objekten bei einem Radarsensor mit mehreren Antennenkeulen, insbesondere einem mehrkanaligen FMCW-Radar, eine verbesserte Bestimmung von Azimut-Winkeln georteter Objekte zu erwarten ist. Darüber hinaus ist vorteilhaft, dass der Berechnungsaufwand für die Abstandsbereichseinteilung durch die erste Dimension der Fourier-Transformation aufgrund der geringen benötigten Anzahl von Abtaststellen bzw. Frequenzbins vertretbar ist, während der Berechnungsaufwand für das Frequenzmatching verringert und/oder die Detektionsleistung und Detektionszuverlässigkeit in Situationen mit vielen Radarzielen deutlich verbessert werden kann.

Weitere vorteilhafte Ausgestaltungen der Erfindung sind in den Unteransprüchen angegeben.

KURZBESCHREIBUNG DER ZEICHNUNGEN

Ausführungsbeispiele der Erfindung werden anhand der Zeichnungen in der nachfolgenden Beschreibung näher erläutert.

Es zeigen:

Fig. 1    ein schematisches Blockschaltbild eines Radarsensorsystems für Kraftfahrzeuge;

Fig. 2    eine schematische Darstellung einer eine übergeordnete Rampe bildenden Folge von Frequenzmodulationsrampen eines Sendesignals;

Fig. 3    ein Diagramm zur Erläuterung des erfindungsgemäßen Verfahrens; und

Fig. 4    eine schematische Darstellung von Geraden und Entfernungsbereichen in einem Abstands/Geschwindigkeits-
Raum; und

Fig. 5    ein weiteres Beispiel einer Konstellation von Geraden und Entfernungsbereichen in einem Abstands/Geschwindigkeits-Raum.

DETAILLIERTE BESCHREIBUNG VON AUSFÜHRUNGSBEISPIELEN

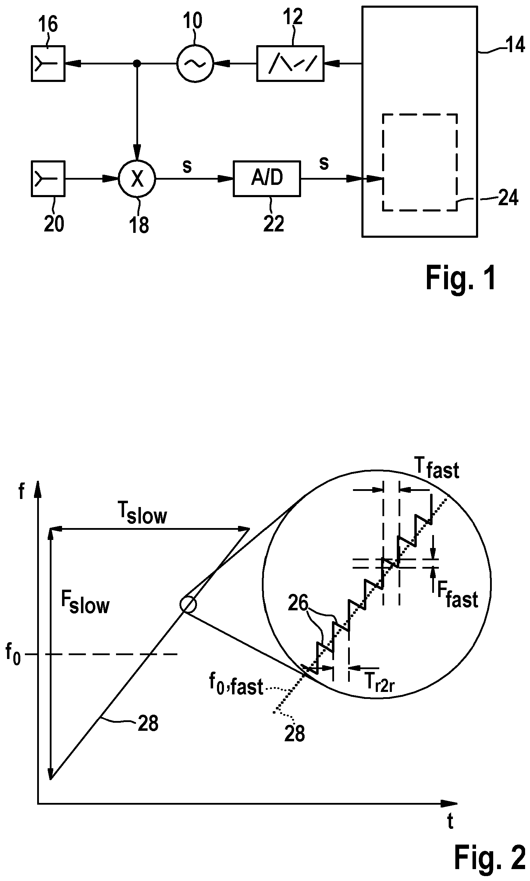

Fig. 1 zeigt schematisch den Aufbau eines Radarsensorsystems für Kraftfahrzeuge. Das System umfasst einen
spannungsgesteuerten Hochfrequenz-(HF)-Oszillator 10 zur Erzeugung eines Sendesignals. Die Frequenz f des HF-
Oszillators 10 wird von einer Frequenzmodulationseinrichtung 12 gesteuert, die wiederum von einer Steuer- und Auswerteeinheit 14 gesteuert wird. Ein Ausgang des HF-Oszillators ist mit mindestens einem Sendeantennenelement 16
verbunden, um ein Sendesignal des Radarsensorsystems abzustrahlen.
Weiter ist ein Ausgang des HF-Oszillators 10 mit einem Mischer 18 verbunden. Dieser ist dazu eingerichtet,
ein von einem Empfangsantennenelement 20 empfangenes Empfangssignal mit dem Sendesignal zu mischen, um ein
Basisbandsignal zu erzeugen. Das Basisbandsignal wird durch ein Analog-Digital-Umwandler 22 digitalisiert und der
Steuer- und Auswerteeinheit 14 zugeführt. Das Mischen und Digitalisieren erfolgt unter Erhalt der Phasenbeziehungen
zwischen dem Sendesignal und dem empfangenen Signal. Die Steuer- und Auswerteeinheit 14 umfasst eine digitale
Signalverarbeitungseinheit 24 zur Auswertung von Frequenzspektren des Basisbandsignals und zum Durchführen eines
Matching zur Zuordnung der erhaltenen Peaks zu potentiellen Objekten oder Radarzielen.
Die Frequenzmodulationseinrichtung 12 ist dazu eingerichtet, in einem Messzyklus des Radarsensorsystems
das Sendesignal mit Rampensätzen, die jeweils eine Folge von Frequenzmodulationsrampen umfassen, zu modulieren.
Fig. 2 zeigt schematisch beispielhaft für einen Rampensatz den Verlauf der Frequenz f eines Sendesignals
über der Zeit t.
Fig. 2 zeigt in einem vergrößerten Ausschnitt einen kleinen Zeitabschnitt einer Folge gleichartiger kurzer Frequenzrampen 26. Die Mittelpunkte der kurzen Frequenzrampen 26, entsprechend den bei einem zeitlichen Mittelpunkt
einer jeweiligen Frequenzrampe 26 durchlaufenen jeweiligen Mittenfrequenzen der kurzen Frequenzrampen 26, liegen
auf einer übergeordneten Rampe 28. Diese ist im vergrößerten Ausschnitt punktiert dargestellt und in der Darstellung
der gesamten übergeordneten Rampe 28 als durchgezogene Linie dargestellt. Die Folge der kurzen Frequenzrampen
26 bildet somit eine übergeordnete Frequenzrampe 28. Die übergeordnete Rampe 28 ist aus den kurzen Rampen 26
zusammengesetzt.
Die kurzen Rampen 26 einer übergeordneten Rampe 28 haben jeweils dieselbe Steigung, die dem Quotienten
aus dem Frequenzhub $F_{fast}$ über der Zeitdauer $T_{fast}$ einer kurzen, schnellen Rampe 26 entspricht. Die kurzen Rampen
26 einer übergeordneten Rampe 28 haben außerdem einen identischen Frequenzhub $F_{fast}$ und demnach ebenfalls eine
identische Rampendauer $T_{fast}$. Weiter haben die kurzen Rampen 26 der übergeordneten Rampe 28 jeweils dieselbe
Rampenwiederholzeit $T_{r2r}$, die dem zeitlichen Abstand zweier Rampen 26 entspricht. Im gezeigten Beispiel ist der
Rampenabstand $T_{r2r}$ gleich der Rampendauer Tfast.
Die übergeordnete Rampe 28 hat eine Rampensteigung entsprechend dem Quotienten aus dem Frequenzhub
$F_{slow}$ und der Rampendauer $T_{slow}$ der Rampe 28. Die Mittenfrequenz der übergeordneten Rampe 26 wird mit $f_0$ bezeichnet.
Die mittlere Frequenz des Sendesignals liegt in der Größenordnung von 76 GHz, und der Frequenzhub $F_{slow}$,
um den sich die Frequenz im Laufe jeder übergeordneten Rampe 28 ändert, liegt in der Größenordnung von einigen
100 MHz. Der Frequenzhub der kurzen Rampen liegt in der Größenordnung von einigen MHz, und die Rampendauer
der kurzen Rampen liegt in der Größenordnung von einigen Mikrosekunden. Der seitliche Abstand $T_{r2r}$, in dem die
kurzen Rampen 26 aufeinander folgen, liegt in der Größenordnung von einigen Mikrosekunden. Der Frequenz $F_{slow}$ der
übergeordneten Rampe 28 liegt in der Größenordnung von einigen 100 MHz, und die Rampensteigung $F_{slow}/T_{slow}$ der
übergeordneten Rampe 28 liegt in der Größenordnung von 100 MHz/ms.
Der Rampenhub und die Rampensteigung der übergeordneten Rampe 28 entsprechen beispielsweise einer
herkömmlichen Frequenzrampe eines aus mehreren Frequenzrampen bestehenden Modulationszyklus eines FMCW-Radarsensors, der ein Frequenzmatching zur Zuordnung von aufgefundenen Frequenzen zu erfassten Objekten durchführt.

Die Frequenz des Basisbandsignals entspricht dem Frequenzunterschied zwischen dem Sendesignal und dem Signal, das nach Reflexion an Objekten von dem Empfangsantennenelement 20 empfangen wurde und ebenfalls am Mischer 18 eintrifft. Dieser Frequenzunterschied setzt sich additiv zusammen aus einem abstandsabhängigen Anteil $f_d$ und einem geschwindigkeitsabhängigen Anteil $f_v$.

Innerhalb einer kurzen Rampe 26 resultiert der abstandsabhängige Anteil $f_d$ der Frequenz aus der Frequenzmodulation mit der kurzen Rampe 26 und ist hier gegeben durch:

$$f_d = 2dF_{fast}/(cT_{fast}) \qquad (1)$$

wobei c die Lichtgeschwindigkeit ist und d die Objektentfernung bezeichnet. Der geschwindigkeitsabhängige Anteil resultiert aus dem Dopplereffekt und ist innerhalb einer kurzen Rampe 26 näherungsweise gegeben durch

$$f_v = 2f_{0,fast}v/c \qquad (2)$$

wobei $f_{0,fast}$ die sich über die Folge der kurzen Rampen 26 ändernde Mittenfrequenz der jeweiligen kurzen Rampe 26 ist. Sie ändert sich über die Folge der Rampen 26 entsprechend dem linearen Verlauf der übergeordneten Rampe 28.

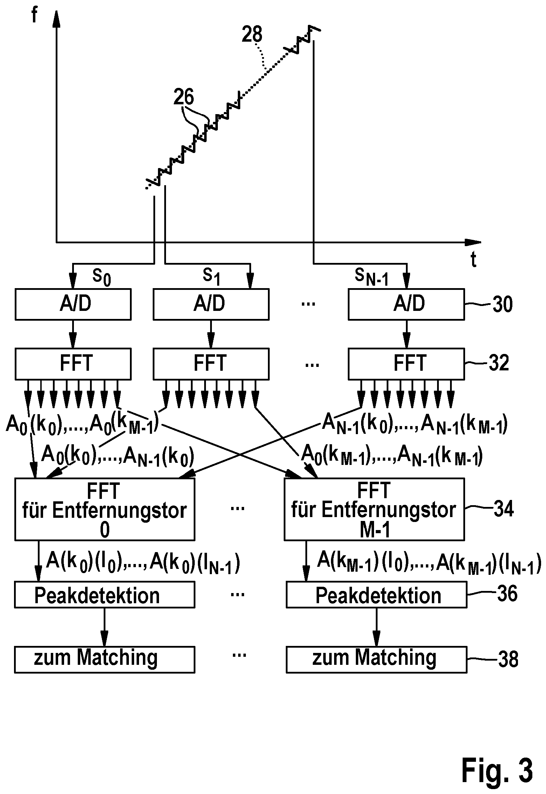

Fig. 3 zeigt schematisch die Verarbeitung der zu den jeweiligen kurzen Rampen 26 erhaltenen Basisbandsignale. Das Basisband-Teilsignal jeder kurzen Rampe 26 wird mit einer geringen Anzahl $N_{fast}$ von Abtaststellen durch den A/D-Wandler 22 abgetastet (30). Es wird in jeder kurzen Rampe 26 mit dem jeweiligen Rampenindex n, n=0,...,N-1, mittels einer ersten Fourier-Transformation 32 in Form einer schnellen Fourier-Transformation (FFT) ein komplexwertiges Frequenzspektrum $(A_n(k_0),...,A_n(k_{M-1}))$ bestimmt. Die Anzahl der Abtaststellen beträgt beispielsweise $M = N_{fast} = 16$. Die Anzahl der kurzen Rampen 26 einer Folge beträgt beispielsweise $N = N_{slow} = 512$.

Aufgrund eines kurzen Hubs $F_{fast}$ der kurzen Rampen 26 ergibt sich eine relativ geringe Entfernungsauflösung $R = c/(2F_{fast})$. Beispielsweise ergibt sich bei einem Frequenzhub $F_{fast} = 5$ MHz eine Entfernungsauflösung von $R = 30$ m. Die Frequenzlage eines Peaks im Frequenzspektrum der ersten FFT 32 liefert daher keine genaue Information über die Entfernung d eines Objektes, sondern kennzeichnet lediglich einen Parameterbereich für mögliche Werte der Entfernung d und der Relativgeschwindigkeit v eines Objektes, wobei dieser Parameterbereich für eine jeweilige Relativgeschwindigkeit v auf einen Abstandsbereich beschränkt ist, der wenigstens die Breite entsprechend der genannten Entfernungsauflösung R hat. Dieser Parameterbereich entspricht somit einer Teilfläche in Form eines Bands im Abstands-Geschwindigkeits-Raum, der im folgenden auch als d-v-Raum bezeichnet wird.

Je steiler die kurzen Rampen 26 sind, desto dominanter ist der abstandsabhängige Anteil $f_d$ der aufgefundenen Frequenz. Die Frequenzlage in der ersten FFT 32, d.h. die Frequenzlage im Teilsignal-Frequenzspektrum, entspricht im d-v-Raum einem auf wenigstens einen Entfernungsbereich der Breite R begrenzten Band. Mit zunehmender Steigung der kurzen Rampen 26 nähert sich die Form des Bands innerhalb des Eindeutigkeitsbereichs der Messung an ein Rechteck der Breite R in Abstandsrichtung an.

Die Teilsignal-Frequenzspektren der ersten Fourier-Transformation 30 werden für die jeweiligen Bänder zusammengefasst und einer zweiten Fourier-Transformation 34 in Form einer FFT unterzogen. Die Zusammenfassung wird auch als Bildung von Entfernungstoren bezeichnet. Beispielsweise liefert die erste FFT 32 jeweils ein Frequenzspektrum über eine Anzahl M von Frequenzbins oder Entfernungstoren m = 0, 1, ..., M-1. Für alle kurzen Rampen 26 einer übergeordneten Rampe 28 wird dann für ein jeweiliges Entfernungstor m durch die FFT 34 über den zeitlichen Verlauf der komplexen Werte $A_0(k_m),...,A_{N-1}(k_m)$ des Frequenzbins m über die Folge der kurzen Rampen 26 ein übergeordnetes Frequenzspektrum $(A(k_m)(l_0), ..., A(k_m)(l_{N-1}))$ berechnet.

Bei einer herkömmlichen Berechnung eines Frequenzspektrums eines Basisbandsignals in einer herkömmlichen Frequenzrampe wird beispielsweise eine Fourier-Transformation durchgeführt, um anschließend Frequenzpeaks zu detektieren, die jeweils einer Geraden im d-v-Raum entsprechen. Demgegenüber werden hier bei der zweiten FFT 34 jeweils nur diejenigen erfassten Objekte berücksichtigt, deren Abstand d und Relativgeschwindigkeit v dem jeweiligen Entfernungstor m entsprechen, d.h. die in einem jeweiligen Band des Abstands/Geschwindigkeitsraumes liegen und somit nährungsweise einem jeweiligen Entfernungsbereich entsprechen.

Ein Peak in einem Frequenzbin l im übergeordneten Frequenzspektrum $(A(k_m)(l_0), ..., A(k_m)(l_{N-1}))$ einer zweiten FFT 34 eines Entfernungstores m entspricht somit einem empfangenen Signal von einem Objekt, das in den ersten FFTs 32 eine Frequenzlage beim Frequenzbin m hat und sich auf dem entsprechenden Band im Abstand-/Geschwindigkeitsraum befindet und gleichzeitig auch die Bedingungen der FMCW-Gleichung für die übergeordnete Rampe 26 erfüllt. Das heißt, die über die Folge der kurzen Rampen 26 auftretende, in der zweiten FFT 34 bestimmte Frequenz $f_2$ setzt sich zusammen aus einem abstandsabhängigen Anteil $f_{2d}$ und einem geschwindigkeitsabhängigen Anteil $f_{2v}$, wobei

gilt:

$$f_{2d} = 2dF_{slow}/(cT_{slow}), \text{ und} \qquad (3)$$

$$f_{2v} = 2f_0v/c \qquad (4)$$

Die FMCW-Gleichung für die übergeordnete Rampe 28 beschreibt dementsprechend die Gerade d(v) im d-v-Raum:

$$d = T_{slow}/F_{slow} (f_2c/2 - f_0v) \qquad (5)$$

Die Hintereinanderschaltung der ersten und zweiten FFTs 32, 34 entspricht einer zweidimensionalen Fourier-Transformation. Nach der Peak-Detektion 36 der Frequenzen der Peaks in den Frequenzspektren der zweiten FFT 34 werden die gewonnenen Informationen über Abstände und Relativgeschwindigkeiten georteter Objekte in einem Schritt 38 dem Frequenzmatching zugeführt. Das Frequenzmatching verwendet neben der aus den zweiten FFTs 34 gewonnenen Information, die jeweiligen Geraden im v-d-Raum entspricht, zusätzlich die anhand der ersten FFTs 32 gewonnene Information über die zugeordneten Bänder des v-d-Raums.

Diese Durchführung des Frequenzmatching anhand der in den Entfernungstoren gewonnenen Information wird im folgenden anhand eines Messzyklus mit vier verschiedenen Rampensätzen erläutert, wobei jeder Rampensatz den anhand von Fig. 2 erläuterten Aufbau aus einer Folge kurzer Rampen 26 hat. Die übergeordneten Rampen 28 der Rampensätze eines Messzyklus unterscheiden sich vorzugsweise in ihrer Rampensteigung und/oder in ihrer Mittenfrequenz. Im beschriebenen Beispiel unterscheiden sich die durch die jeweiligen Rampensätze gebildeten übergeordneten Rampen 28 hinsichtlich der Rampensteigung, so dass sich im v-d-Raum für jedes geortete Objekt Geraden unterschiedlicher Steigung ergeben.

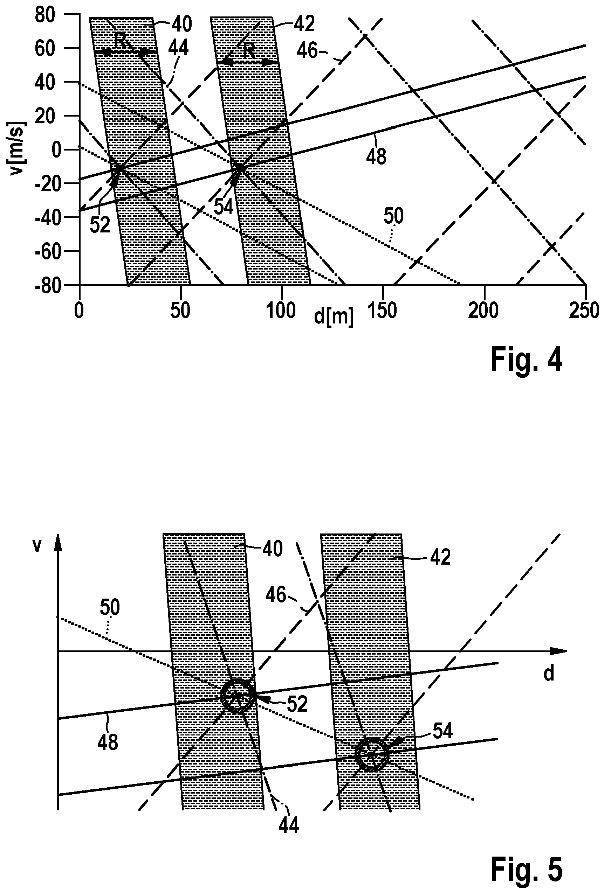

Fig. 4 veranschaulicht schematisch die Zuordnung der aufgefundenen Peak-Frequenzen zu erfassten Objekten anhand einer Darstellung im Abstands/Geschwindigkeitsraum. Im Beispiel umfasst ein Messzyklus mehrere, insbesondere vier Rampensätze.

Vorzugsweise haben für wenigstens eine Folge der Frequenzrampen 26 eines Messzyklus die Frequenzrampen 26 eine Rampensteigung, deren Absolutbetrag größer ist als ein Absolutbetrag einer Steigung der zugehörigen übergeordneten Rampe 28.

Vorzugsweise haben die Frequenzrampen 26 wenigstens einer Folge von Frequenzrampen 26 eines Messzyklus einen Frequenzhub $F_{fast}$, dessen Absolutbetrag kleiner oder gleich dem Absolutbetrag des Frequenzhubs $F_{slow}$ der zugeordneten übergeordneten Rampen 28 ist, besonders bevorzugt kleiner oder gleich 1/10 des Absolutbetrags des Frequenzhubs $F_{slow}$ der zugeordneten übergeordneten Rampen 28 ist.

Im Beispiel der Fig. 4 unterscheiden sich die kurzen Rampen 26 der vier Rampensätze lediglich durch die durch den Verlauf der übergeordneten Rampen 28 jeweils bestimmten Mittenfrequenzen. Die Parameter der kurzen Rampen 26 sind: $F_{fast}$ = 5 MHz, $T_{fast}$ = 0,008 ms, $T_{r2r}$ = 0,008 ms, und die den kurzen Rampen entsprechenden Basisbandsignale werden am $N_{fast}$ = 8 Abtaststellen abgetastet. Dies hat den Vorteil, dass die sich in jedem Rampensatz ergebenden Bänder des d-v-Raums, die den unterschiedlichen Frequenzlagen in der ersten FFT entsprechen, für die Rampensätze näherungsweise gleich sind. Insbesondere haben sie dieselbe Breite R in Abstandsrichtung und denselben Offset in Abstandsrichtung vom Ursprung d = 0, v = 0.

Die Parameter der übergeordneten Rampen 28 der Rampensätze unterscheiden sich lediglich durch ihren Frequenzhub $F_{slow}$. Dieser beträgt für die vier Rampensätze: $F_{slow}$ = (425 MHz, -400 MHz, -100 MHz, 200 MHz). Die Mittenfrequenz der übergeordneten Rampen 28 beträgt beispielsweise in jedem Rampensatz $f_0$ = 76,5 GHz. Die Rampendauer der übergeordneten Rampen 28 ist beispielsweise für die vier Rampensätze identisch $T_{slow}$ = 4,096 ms, und die Rampensätze umfassen jeweils eine Folge von $N_{slow}$ = 512 kurzen Rampen 26.

Insbesondere ist die Steigung der kurzen Rampen 26 eines Rampensatzes von der Steigung der zugehörigen übergeordneten Rampe 28 verschieden. Insbesondere ist auch der Absolutbetrag der Steigung der kurzen Rampen 26 größer als alle Absolutbeträge der Steigungen der übergeordneten Rampen 28 des Messzyklus.

Im dargestellten Beispiel wird angenommen, dass ein erstes Ziel bei einer Entfernung d = 20 m mit einer Relativgeschwindigkeit v = -10 m/s und ein zweites Objekt bei einer Entfernung d = 80 m und einer Relativgeschwindigkeit, die ebenfalls v = -10 m/s beträgt, geortet werden.

Im Diagramm der Fig. 4, einer Darstellung des d-v-Raums mit der Relativgeschwindigkeit v über der Entfernung d, ist mit schraffierten Flächen die Lage der den beiden Objekten zugeordneten Bänder 40, 42 im d-v-Raum gekennzeichnet. Als Geraden 44, 46, 48, 50 sind die aus der jeweiligen zweiten FFT 34 erhaltenen Frequenzen gemäß dem entsprechenden linearen Zusammenhang zwischen Geschwindigkeit v und Abstand d dargestellt.

Bei dem Matching wird nach Orten im v-d-Raum gesucht, bei denen sich zu den erhaltenen Frequenzen gehörende Geraden 44, 46, 48, 50 aus den vier Rampensätzen im Rahmen eines Toleranzbereichs an einem Ort (v, d) 52 bzw. 54 schneiden. Das Frequenzmatching wird erheblich vereinfacht, indem es für die zu den unterschiedlichen Frequenzlagen der ersten FFT, und somit für die dargestellten Flächen 40, 42 des d-v-Raums, separat durchgeführt wird. Dabei wird für ein gegebenes Entfernungstor, d.h. für ein gegebenes Band 40, 42 bzw. Frequenzlage in der ersten FFT ein Matching jeweils unter denjenigen Geraden und entsprechenden Frequenzen der zweiten FFT durchgeführt, die bei der dem Band entsprechenden Frequenzlage der ersten FFT aufgefunden wurden. Die im Beispiel angenommenen zwei Objekte können somit sicher detektiert werden.

In der Darstellung in Fig. 4 wiederholen sich aufgrund des beschränkten Eindeutigkeitsbereichs der Entfernung für die übergeordneten Rampen 28 die Geraden 44, 46, 48, 50 innerhalb des dargestellten Abstandsbereichs. Durch die den Geraden zugeordneten Bänder 40, 42 ist eine Auswertung in der jeweiligen Geraden beschränkt auf das jeweils zuordnete Band möglich, so dass die erwähnten Mehrdeutigkeiten aufgelöst werden können.

Fig. 5 zeigt schematisch ein weiteres Beispiel eines d-v-Raums für einen Fall, bei dem zwei Objekte in einem Rampensatz auf derselben Geraden 50 im d-v-Raum liegen. Die unterschiedlichen zugeordneten Bänder 40, 42 ermöglichen eine Zuordnung zu beiden Objekten. Die für beide Objekte gemeinsam erhaltene Gerade 50 entspricht einer Frequenz, die bei der zweiten FFT 34 in zwei unterschiedlichen Entfernungstoren aufgefunden wird. Dementsprechend tritt diese Frequenz bei zwei unterschiedlichen Frequenzlagen der ersten FFTs 32 auf, entsprechend den dargestellten Bänder 40, 42.

Je nach Verkehrssituation kann die Auswertung der aufgefundenen Frequenzen auf relevante Bänder des d-v-Raums beschränkt werden. Beispielsweise können anhand eines Fahrparameters wie beispielsweise der Fahrgeschwindigkeit des eigenen Kraftfahrzeugs relevante Bänder ausgewählt werden. So kann beispielsweise bei Langsamfahrt unterhalb einer Geschwindigkeitsgrenze die Auswahl auf Bänder beschränkt werden, die Abstände d unterhalb einer Entfernungsgrenze umfassen. So sind beispielsweise im Stillstand des Fahrzeugs weit entfernte Objekte für die Ortung nicht relevant und können durch entsprechende Auswahl der auszuwertenden Bänder unberücksichtigt bleiben. Als Fahrparameter kann beispielsweise auch ein gewählter Gang einer Gangschaltung berücksichtigt werden.

## Patentansprüche

1. Verfahren zur Bestimmung von Information über Abstände und Relativgeschwindigkeiten georteter Objekte mit einem FMCW-Radar, bei dem

- innerhalb eines Messzyklus die Frequenz (f) eines Sendesignals in der Form unterschiedlicher Folgen von Frequenzrampen (26) moduliert wird, wobei innerhalb einer jeweiligen Folge die Mittelpunkte der Frequenzrampen (26) auf einer übergeordneten Rampe (28) liegen, wobei der Messzyklus wenigstens zwei übergeordnete Rampen (28) umfasst, die eine unterschiedliche Rampensteigung haben, und wobei die Steigung der Frequenzrampen (26) einer jeweiligen Folge von Frequenzrampen (26) eines Messzyklus von der Steigung der zugehörigen übergeordneten Rampe (28) verschieden ist;
- die in den Frequenzrampen (26) einer jeweiligen Folge empfangenen Signale zu Basisband-Teilsignalen (s) heruntergemischt werden, wobei jeder Frequenzrampe (26) der Folge ein Teilsignal zeitlich zugeordnet ist;
- für wenigstens eine Frequenzlage (k) in Frequenzspektren (An) der Basisband-Teilsignale (s) ein übergeordnetes Frequenzspektrum (A(k)) über die zeitliche Folge von Amplituden bei der Frequenzlage (k) in den Frequenzspektren (An) der jeweiligen Folge der Basisband-Teilsignale (s) bestimmt wird;
- Peaks in dem wenigstens einen übergeordneten Spektrum (A(k)) einer jeweiligen Folge von Frequenzrampen (26) durch Geraden (44, 46, 48, 50) in einem Abstands/Geschwindigkeits-Raum repräsentiert werden, deren jeweilige Steigung von der Steigung der übergeordneten Rampe (28) abhängt;
- unterschiedliche Frequenzlagen (k) in den Frequenzspektren (An) der Teilsignale (s), bei denen Peaks in einem übergeordneten Spektrum (A(k)) auftreten, durch unterschiedliche, auf wenigstens einen Entfernungsbereich begrenzte Bänder (40, 42) des Abstands/Geschwindigkeits-Raums repräsentiert werden;
- eine Zuordnung von durch Geraden (44, 46, 48, 50) im Abstand-/Geschwindigkeits-Raum repräsentierten Peaks in den übergeordneten Spektren (A(k)) zu Objekten anhand einer Suche nach Orten im Abstands/Geschwindigkeits-Raum erfolgt, bei denen sich Geraden schneiden, die aus unterschiedlichen Folgen von Frequenzrampen erhaltene Peaks der übergeordneten Spektren (A(k)) repräsentieren, wobei bei der Zuordnung die jeweiligen, die Frequenzlagen (k) in den Frequenzspektren (An) der Basisband-Teilsignale (s) repräsentierenden Bänder (40, 42) des Abstands/Geschwindigkeits-Raums berücksichtigt werden, die den Peaks durch die Frequenzlagen (k) der Peaks in den Frequenzspektren (An) der Teilsignale (s) zugeordnet sind; und

- die Zuordnung von in den übergeordneten Spektren auftretenden Peaks zu Objekten für unterschiedliche, jeweiligen Frequenzlagen (k) der Teilsignal-Frequenzspektren (A_n) zugeordnete Bänder (40, 42) separat durchgeführt wird.

2. Verfahren nach Anspruch 1, bei dem zur Zuordnung von durch Geraden im Abstand-/Geschwindigkeits-Raum repräsentierten Peaks in den übergeordneten Spektren zu Objekten für mögliche Werte von Abstand (d) und Geschwindigkeit (v), die einem einer zu einem Peak gehörenden Frequenzlage (k) in den Teilsignal-Frequenzspektren (A_n) zugeordneten Band (40, 42) entsprechen, lediglich diejenigen im übergeordneten Spektrum (A(k)) aufgefundenen Peaks berücksichtigt werden, die durch ihre zugehörige Frequenzlage (k) in den Teilsignal-Frequenzspektren (A_n) diesem Band zugeordnet sind.

3. Verfahren nach einem der vorstehenden Ansprüche, bei dem basierend auf wenigstens einem Fahrparameter eine Auswahl wenigstens eines relevanten Bands (40; 42) erfolgt, das wenigstens einer möglichen Frequenzlage (k) in den Teilsignal-Frequenzspektren (A_n) zugeordnet ist, und die Zuordnung der in übergeordneten Spektren auftretenden Peaks zu Objekten lediglich für solche Peaks erfolgt, denen durch ihre zugehörigen Frequenzlagen (k) in den Teilsignal-Frequenzspektren (A_n) ein zu der Auswahl gehörendes Band (40, 42) zugeordnet ist.

4. Verfahren nach Anspruch 1, wobei innerhalb des Messzyklus die Frequenzrampen (26) der unterschiedlichen Folgen dieselbe Rampensteigung haben.

5. Verfahren nach einem der vorstehenden Ansprüche, bei dem für wenigstens eine Folge der Frequenzrampen (26) eines Messzyklus die Frequenzrampen (26) eine Rampensteigung haben, deren Absolutbetrag größer ist als ein Absolutbetrag einer Steigung der zugehörigen übergeordneten Rampe (28).

6. Verfahren nach einem der vorstehenden Ansprüche, bei dem die Frequenzrampen (26) wenigstens einer Folge von Frequenzrampen (26) eines Messzyklus einen Frequenzhub (F_fast) haben, dessen Absolutbetrag kleiner oder gleich dem Absolutbetrag des Frequenzhubs (F_slow) der zugeordneten übergeordneten Rampen (28) ist.

7. Verfahren nach einem der vorstehenden Ansprüche, bei dem die jeweilige Frequenzlage (k) in den Frequenzspektren (A_n) der Basisbandsignale (s) mit einer Auflösung bestimmt wird, die einer einem Abstand (d) von mindestens 10 m entsprechenden Entfernungsauflösung entspricht.

8. FMCW-Radarsensor mit einer Steuer- und Auswertungseinrichtung (14), in der das Verfahren nach einem der Ansprüche 1 bis 7 implementiert ist.

**Claims**

1. Method for determining information about distances and relative speeds of located objects with an FMCW radar, in which

- the frequency (f) of a transmission signal in the form of different sequences of frequency ramps (26) is modulated in one measurement cycle, wherein within one respective sequence the centre points of the frequency ramps (26) lie on a superordinate ramp (28), wherein the measurement cycle comprises at least two superordinate ramps (28) which have a different ramp gradient, and wherein the gradient of the frequency ramps (26) of a respective sequence of frequency ramps (26) of one measurement cycle is different from the gradient of the associated superordinate ramp (28) ;
- the signals which are received in the frequency ramps (26) of a respective sequence are downmixed to form baseband component signals (s), wherein each frequency ramp (26) of the sequence is chronologically assigned a component signal;
- for at least one frequency position (k) in frequency spectra (An) of the baseband component signals (s) a superordinate frequency spectrum (A(k)) is determined over the chronological sequence of amplitudes at the frequency position (k) in the frequency spectra (An) of the respective sequence of the baseband component signals (s) ;
- peaks in the at least one superordinate spectrum (A(k)) of a respective sequence of frequency ramps (26) are represented by straight lines (44, 46, 48, 50) in a distance/speed space, the respective gradient of which depends on the gradient of the superordinate ramp (28);
- different frequency positions (k) in the frequency spectra (An) of the component signals (s) at which peaks occur in a superordinate spectrum (A(k)) are represented by different bands (40, 42), which are limited to at least one distance range, of the distance/speed space;

- an assignment of peaks, which are represented by straight lines (44, 46, 48, 50) in the distance/- speed space, in the superordinate spectra (A(k)) is made to objects on the basis of a search for locations in the distance/speed space at which straight lines which represent peaks of the superordinate spectra (A(k)) which are obtained from different sequences of frequency ramps intersect, wherein the respective bands (40, 42) of the distance/speed space, which represent the frequency positions (k) in the frequency spectra (An) of the baseband component signals (s), are taken into account in the assignment, said bands (40, 42) being assigned to the peaks by the frequency positions (k) of the peaks in the frequency spectra (An) of the component signals (s); and

- the assignment of peaks, occurring in the superordinate spectra, to objects for different bands (40, 42) which are assigned to respective frequency positions (k) of the component signal frequency spectra ($A_n$) is carried out separately.

2. Method according to Claim 1, in which, in order to assign peaks, represented by straight lines in the distance/speed space, in the superordinate spectra to objects for possible values of distance (d) and speed (v) which correspond to a band (40, 42) which is assigned to a frequency position (k), associated with a peak, in the component signal frequency spectra ($A_n$), only those peaks which are found in the superordinate spectrum (A(k)) and which are assigned to this band through their associated frequency position (k) in the component signal frequency spectra ($A_n$) are taken into account.

3. Method according to either of the preceding claims, in which, on the basis of at least one driving parameter, a selection of at least one relevant band (40; 42) which is assigned to at least one possible frequency position (k) in the component signal frequency spectra ($A_n$) is made, and the assignment of the peaks, occurring in superordinate spectra, to objects is made only for peaks to which a band (40, 42) which is associated with the selection is assigned by means of the associated frequency positions (k) of said peaks in the component signal frequency spectra ($A_n$).

4. Method according to Claim 1, wherein within the measurement cycle the frequency ramps (26) of the different sequences have the same ramp gradient.

5. Method according to one of the preceding claims, in which, for at least one sequence of the frequency ramps (26) of a measurement cycle, the frequency ramps (26) have a ramp gradient whose absolute value is greater than an absolute value of a gradient of the associated superordinate ramp (28).

6. Method according to one of the preceding claims, in which the frequency ramps (26) of at least one sequence of frequency ramps (26) of a measurement cycle have a frequency shift ($F_{fast}$) whose absolute value is less than or equal to the absolute value of the frequency shift ($F_{slow}$) of the assigned superordinate ramps (28).

7. Method according to one of the preceding claims, in which the respective frequency position (k) in the frequency spectra ($A_n$) of the baseband signals (s) is determined with a resolution which corresponds to a distance resolution corresponding to a distance (d) of at least 10 m.

8. FMCW radar sensor with a control and evaluation device (14) in which the method according to one of Claims 1 to 7 is implemented.

**Revendications**

1. Procédé de détermination d'une information sur les distances et les vitesses relatives d'objets localisés au moyen d'un radar FMCW, procédé dans lequel

- la fréquence (f) d'un signal d'émission est modulée sous la forme de différentes séquences de rampes de fréquence (26) à l'intérieur d'un cycle de mesure, les points médians des rampes de fréquence (26) se trouvant sur une rampe de niveau supérieur (28) dans une séquence respective, le cycle de mesure comprenant au moins deux rampes de niveau supérieur (28) qui ont des pentes de rampe différentes, et la pente des rampes de fréquence (26) d'une séquence respective de rampes de fréquence (26) d'un cycle de mesure étant différente de la pente de la rampe de niveau supérieur associée (28) ;
- les signaux reçus dans les rampes de fréquence (26) d'une séquence respective sont sous-mixés à des sous-signaux en bande de base, chaque rampe de fréquence (26) de la séquence étant associée dans le temps à un sous-signal ;

- pour au moins une position de fréquence (k) dans les spectres de fréquence (An) des sous-signaux en bande de base (s), un spectre de fréquence de niveau supérieur (A(k)) est déterminé par le biais de la séquence temporelle d'amplitudes à la position de fréquence (k) dans les spectres de fréquence (An) de la séquence respective des sous-signaux en bande de base (s) ;

- des pics dans l'au moins un spectre de niveau supérieur (A(k)) d'une séquence respective de rampes de fréquence (26) sont représentés dans un espace distance/vitesse par des droites (44, 46, 48, 50) dont la pente respective dépend de la pente de la rampe de niveau supérieur (28) ;

- différentes positions de fréquence (k) dans les spectres de fréquence (An) des sous-signaux (s), auxquelles des pics apparaissent dans un spectre de niveau supérieur (A(k)), sont représentées par différentes bandes (40, 42) de l'espace distance/vitesse qui sont limitées à au moins une région d'éloignement ;

- une association de pics dans les spectres de niveau supérieurs (A(k)), représentés par des droites (44, 46, 48, 50) dans l'espace distance/vitesse, à des objets est effectuée sur la base d'une recherche de lieux dans l'espace distance/vitesse où des droites se coupent qui représentent des pics des spectres de niveau supérieur (A(k)) qui sont obtenus à partir de différentes séquences de rampes de fréquence, les bandes respectives (40, 42) de l'espace distance/vitesse, lesquelles représentent les positions de fréquence (k) dans les spectres de fréquence (An) des sous-signaux de bande de base (s) étant prises en compte lors de l'association, lesquelles bandes sont associées aux pics par les positions de fréquence (k) des pics dans les spectres de fréquence (An) des sous-signaux (s) ; et

- l'association de pics, qui apparaissent dans les spectres de niveau supérieur, à des objets pour différentes bandes (40, 42) associées à des positions de fréquence respectives (k) des spectres de fréquence de sous-signaux (An) est effectuée séparément.

2. Procédé selon la revendication 1, dans lequel pour l'association de pics dans les spectres de niveau supérieur, représentés par des droites dans l'espace distance/vitesse, à des objets pour des valeurs possibles de distance (d) et de vitesse (v), qui correspondent à une bande (40, 42) associée à une position de fréquence (k), appartenant à un pic, dans les spectres de fréquence de sous-signaux (An), seuls sont pris en compte les pics qui sont trouvés dans le spectre de niveau supérieur (A(k)) et qui sont associés à cette bande en raison de leur position de fréquence associée (k) dans les spectres de fréquence de sous-signaux (An).

3. Procédé selon l'une des revendications précédentes, dans lequel, sur la base d'au moins un paramètre de conduite, au moins une bande pertinente (40 ; 42) est sélectionnée qui est associée à au moins une position de fréquence possible (k) dans les spectres de fréquence de sus-signaux (An) et l'association des pics, apparaissant dans les spectres de niveau supérieur, à des objets n'est effectuée que pour les pics auxquels une bande (40, 42), appartenant à la sélection, est associée en raison de ses positions de fréquence associées (k) dans les spectres de fréquence de sous-signaux (An).

4. Procédé selon la revendication 1, les rampes de fréquence (26) des différentes séquences ayant la même pente de rampe dans le cycle de mesure.

5. Procédé selon l'une des revendications précédentes, dans lequel, pour au moins une séquence des rampes de fréquence (26) d'un cycle de mesure, les rampes de fréquence (26) ont une pente de rampe dont la valeur absolue est supérieure à une valeur absolue d'une pente de la rampe de niveau supérieur (28) associée.

6. Procédé selon l'une des revendications précédentes, dans lequel les rampes de fréquence (26) d'au moins une séquence de rampes de fréquence (26) d'un cycle de mesure présentent un décalage de fréquence ($F_{fast}$) dont la valeur absolue est inférieure ou égale à la valeur absolue du décalage de fréquence ($F_{slow}$) des rampes de niveau supérieur (28) associées.

7. Procédé selon l'une des revendications précédentes, dans lequel la position de fréquence respective (k) dans les spectres de fréquence (An) des signaux de bande de base (s) est déterminée avec une résolution qui correspond à une résolution d'éloignement correspondant à une distance (d) d'au moins 10 m.

8. Capteur radar FMCW comprenant un dispositif de commande et d'évaluation (14) dans lequel le procédé selon l'une des revendications 1 à 7 est mis en œuvre.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009000468 A1
- EP 1918736 A2
- DE 10243811 A1

**In der Beschreibung aufgeführte Nicht-Patentliteratur**

- **H. ROHLING ; M.-M. MEINECKE.** Waveform Design Principles for Automotive Radar Systems. IEEE, 2001